# EUROPEAN PATENT SPECIFICATION

(11) **EP 1 053 192 B1**
(45) Date of publication and mention of the grant of the patent: **12.06.2002**
(21) Application number: 99900707.3
(22) Date of filing: 12.01.1999
(51) Int. Cl.: B65G 17/08

(54) **LINK BELT FOR CONVEYING PRODUCTS, WITH LINKS PROVIDED WITH GUIDING MEANS**
GLIEDERBAND ZUR PRODUKTFÖRDERUNG, MIT GLIEDERN VERSEHEN MIT FÜHRUNGSELEMENTEN
BANDE ARTICULEE DE TRANSPORT DE PRODUITS DOTEE DE LIAISONS POURVUES DE MOYENS DE GUIDAGE

(30) Priority: 03.02.1998 NL 1008189
(43) Date of publication of application: 22.11.2000
(73) Proprietor: Kaak, Johan Hendrik Bernard, 7011 DZ Gaanderen (NL)
(72) Inventor: PASCH, Lothar, NL-7061 WV Terborg (NL)
(74) Representative: De Hoop, Eric
(86) International application number: NL9900018
(87) International publication number: WO9939997

(56) References cited:
- EP-A- 0 782 966
- GB-A- 2 008 523
- US-A- 3 946 857
- US-A- 5 573 105

## Description

The present invention relates to a link belt with links provided with a number of link members for conveying products, the link belt having a carrying surface for carrying products and a surface opposing said carrying surface, the link belt defining a plane, the links being made from a compression mouldable or castable plastic material or similar material.

Such a link belt is known from European patent application 0 427 337, and can for instance be used to convey bakery products over a track in treatment devices. The length of such a link belt can be considerable, while the track may have some bends. In order to have the link belt run reproducibly through the treatment device, the treatment device contains side guides for the link belt which engage the outer parts of the link belt. Because of the inevitable contact between the side guides and the link belt, frictions arise, particularly in the bends of the track, which not only cause wear but also with certain lengths of link belt require a considerable degree of driving or on the other hand only renders shorter lengths of link belt usable.

It is among other things an object of the present invention to provide a link belt with links provided with a number of link members for conveying products, in which the friction between the link belt and the side guides is considerably reduced. This does not only result in reducing the wear of the side guide and the link belt but also the degree of driving can be reduced for a certain length of link belt, or on the other hand with the same drive a greater length of link belt can be used. All this among other things leads to a cost reduction.

To that end a link belt of the sort as defined is according to the invention characterized in that a number of the outer link members comprise a rolling element which partly protrudes outwardly from the link member, and in that said rolling element is positioned between the carrying surface and the surface opposing the carrying surface. By using rolling elements in the link belt the known sliding friction is transformed into a rolling friction which considerably reduces the degree of friction between the link belt and the side guide.

It is known per se from EP-A1-0 782 966 and US-A-3,946,857 to use rolling elements to reduce friction. These rolling elements, however, are not positioned between the carrying surface and the surface opposing the carrying surface, and the rolling elements do not protrude outwardly from the link members.

The use of rolling elements according to the invention is not limited to the link belt as described in European patent application 0 427 337, but can also be used with other link belts, the links of which are made from a compression mouldable or castable plastic material, or similar material.

A preferred embodiment of the invention is characterized in that each link comprises a number of flat link members each with a recess defined by pulling arms and each with a slotted hole, each link having a hinge pin with a centre line which can be moved in the plane of the link belt through the slotted holes of the link members of an adjacent link, the adjacent pulling arms of two adjacent link members of a link being connected by a bush in which the hinge pin of said link fits, at least one end of each hinge pin being attached to an outer bush having an inside which is attached with an outer pulling arm, the end wall of the slotted hole of at least one of the outer link members having a semi-circular wall.

Preferably the end wall of said slotted hole forms a line which encloses an angle unequal to 0° with the centre line of the hinge pin which fits in said slotted hole.

Preferably each outer link member comprises a rolling element which partly protrudes from the link member. However, depending on the construction it is possible to provide only a part of the outer link members with rolling elements, for instance half or a third of the total number of link members.

A preferred embodiment of a link belt according to the invention is characterized in that each of the rolling elements is placed such in the link member concerned that when exerting lateral forces on the link belt no moment is exerted on the link belt. Unwanted lifting of at least a part of the link belt at a certain degree of lateral forces is prevented in this way.

When the rolling element is a rotatable disc, this can be realized in a simple manner by situating the central plane of each of the rotatable discs in the central plane of the link belt.

Preferably the rolling element comprises a rotatable disc, which can be accommodated in a flat link belt in a mechanically simple manner.

Preferably each outer link member is provided with a supporting construction integrated therewith for rotatably supporting the rolling element, in which it is further preferred that the supporting construction is simultaneously manufactured with the links from the same compression mouldable or castable plastic material. In this way a link member with supporting construction can be made in one progress of a production process, after which the rolling element can be placed in the supporting construction.

The invention will be elucidated below on the basis of a drawing, in which by way of example an embodiment of a link belt according to the present invention is shown, in which:
Figure 1 schematically shows in top view a part of a known link belt;
Figure 2 schematically partially in cross-section shows a part of an outer link member of the known link belt;
Figure 3 shows a part with bends and straight parts of a track of a link belt through a treatment device;
Figure 4 schematically and partially shows a cross-section along the line IV-IV in figure 3, showing the side guide and the track construction;
Figure 5 schematically shows in top view a part of a link belt according to the present invention, in which only the outer link members in the inner radius of the link belt are shown;
Figure 6 shows a schematical top view of an outer link member according to figure 5;
Figure 7 shows the outer link member according to figure 6, now partially in cross-section;
Figure 8 shows a cross-section along the line VIII-VIII in figure 6 of an outer link member.

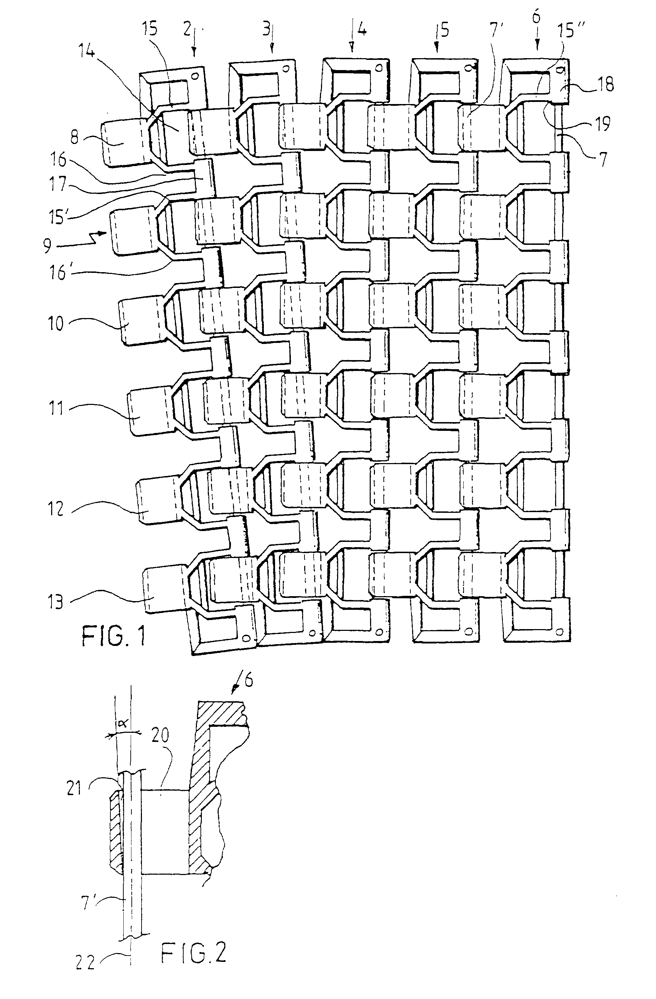

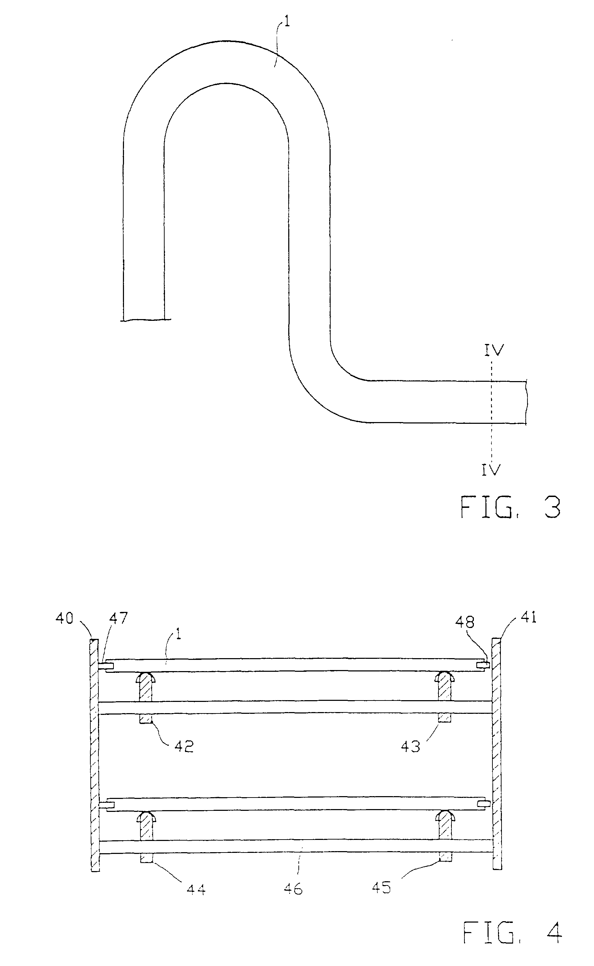

In figure 1 a part of a known link belt according to EP-A-0 427 337 is schematically shown in top view, while in figure 2 a part of an outer link member of the known link belt is schematically shown partially in cross-section. The known link belt 1 is provided with a large number of links, of which the links 2, 3, 4, 5, 6 are shown and comprises hinge pins 7. The link belt 1 is suitable for conveying products such as bakery products or any other kind of product, through a treatment device and defines a plane. The length of such a link belt may be some hundreds of meters.

The links 2, 3, 4, 5, 6 are made from a compression mouldable or castable plastic material or similar material. Each link 2, 3, 4, 5, 6 contains a number of flat link members 8, 9, 10, 11, 12, 13, in the shown example six, although any other number is also possible. Each link member 8-13 has a recess 14 defined by pulling arms 15, 16 and a slotted hole 20 (see figure 2) for accommodating the hinge pin concerned. Each hinge pin 7 has a centre line and can be moved in the plane of the link belt 1 through the slotted holes of the link members of an adjacent link. Here adjacent pulling arms 16, 15' of two adjacent link members 8 and 9 of a link 2 are connected by a bush 17 in which the hinge pin concerned of said link 2 fits. At least one end of each hinge pin (for instance 7) is attached to an outer bush 18 which has an inside 19 which is attached with an outer pulling arm 15". The end wall of the slotted hole 20 of at least one of the outer link members has a semi-circular wall, in which the end wall of said slotted hole forms a line 21 which encloses an angle α, unequal to 0°, with the centre line 22 of the hinge pin 7' which fits in said slotted hole 20. This angle *α* is chosen such depending on the bends to be made by the link belt in the track that tensile forces in these bend-portions are better accommodated. For a further description of the known link belt EP-A-0427337 is referred to.

Figure 3 shows a part of an illustrative track a link belt 1 can make through a treatment device. The track can have a number of bends, such as U-bends, S-bends, squared bends or bends with another angle; and also has a number of straight parts.

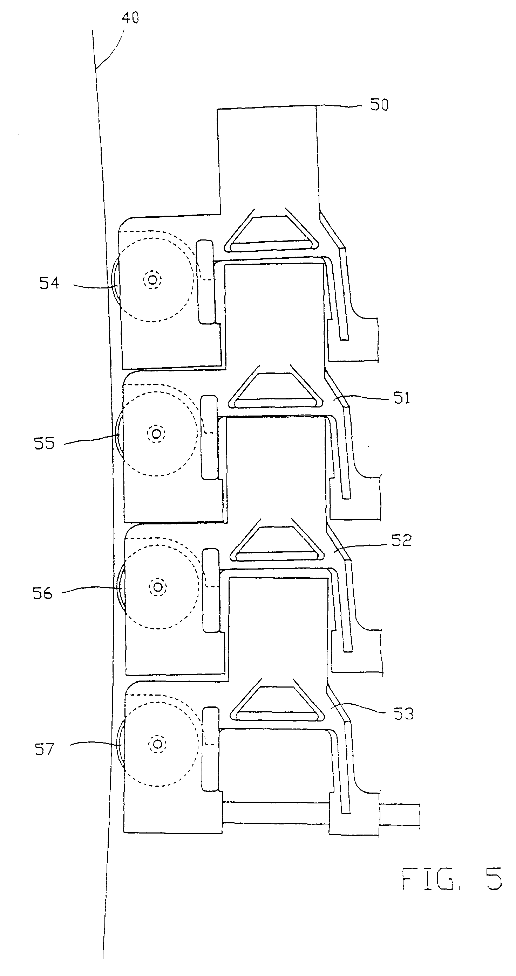

In order to let the link belt 1 run reproducibly through the treatment device, the treatment device comprises side guides 40, 41 (see figure 4) for the link belt 1, which abut the outer members of the link belt 1. In reality all this is made such that one of the outer edges of the link belt abuts one of the side guides, while there is some play between the other outer edge of the link belt and the other side guide. The treatment device further comprises a supporting construction 46 for the link belt, which for instance comprises supporting elements 42, 43, 44, 45, the supporting elements 44 and lower supports support the returning link belt. This supporting construction will not be further described in detail here, as such constructions are known to the expert and the invention does not relate to the specific form of such a construction.

Because of the inevitable contact between the side guides 40 or 41 and the link belt 1, frictions arise particularly in the bends of the track, which do not only cause wear but also with certain lengths of link belt require a considerable degree of driving or on the other hand only render shorter lengths of link belt usable. According to the invention the degree of friction is considerably reduced by providing each outer link member with a rolling element (for each outer part of the link belt generally indicated with 47, 48, respectively, in figure 4) which partly protrudes from the link member. By using rolling elements in the link belt the sliding friction with the known link belt is transformed into a rolling friction which considerably reduces the degree of friction between the link belt and the side guide.

Figure 5 schematically shows in top view a part of a link belt according to the present invention; in which only outer link members 50, 51, 52, 53 are shown. In this example each outer link member 50, 51, 52, 53 is provided with a rolling element 54, 55, 56, 57, respectively, which protrudes from the link member concerned and contacts the side guide 40. Although in figure 5 only one side of the link belt is shown, it will be clear that the outer link members on the other side of the link belt are also provided with rolling elements. Depending on the construction, it is also possible that only each second or third outer link member is provided with a rolling element, or even another part of the total number of outer link members. It also an obvious advantage of the link belt according to the present invention that it can run along bends with counter directions.

Preferably each of the rolling elements is placed such in the link member concerned, that when exerting lateral forces on the link belt no moment is exerted on the link belt, in this way it is prevented that too large a degree of lateral forces lifts at least a part of the link belt.

The rolling element may for instance have the shape of a sphere, or a cylinder, but with a flat link belt it is preferred to design the rolling element as a rotatable disc, so that the flat shape of the link belt, and the advantages connected to it, are maintained. In particular for preventing the creation of moments on the link belt with lateral forces on it, the use of rotatable discs as rolling element is advantageous. By situating the central plane of each of the rotatable discs in the central plane of the link belt, the creation of such moments can be prevented in a mechanically simple manner, because the forces are active in the central plane of the link belt.

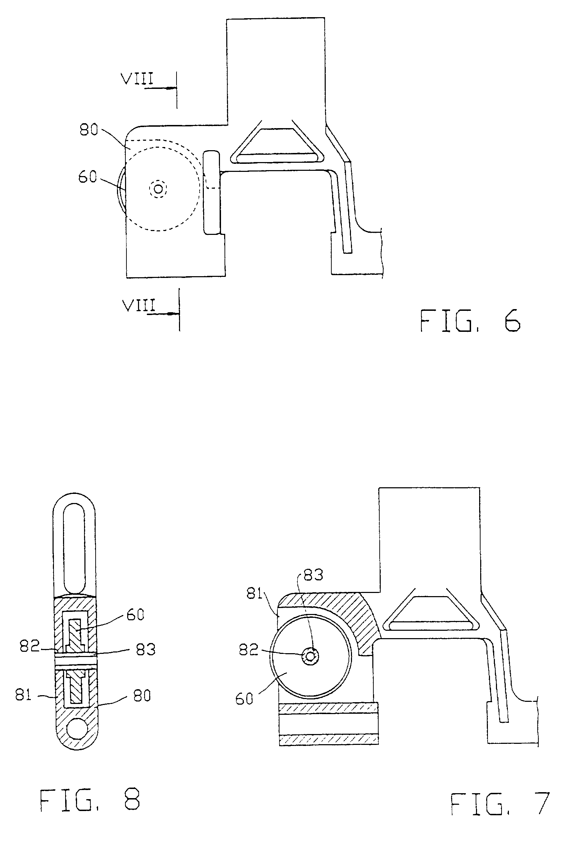

Figure 6 schematically shows a top view of one outer link member according to figure 5, in which the rolling element is a rotatable disc 60, and in which for the sake of clarity of the drawing the hinge pin is left out. Figure 7 shows the outer link member according to figure 6, now partially in cross-section and figure 8 a cross-section along line VIII-VIII of figure 6 of the outer link member, in order to show the rotatable disc 60 better.

Although each rolling element can be attached to each outer link member by a separate connection part, it is preferred to provide each link member with a supporting construction integrated therewith for rotatably supporting the rolling element, for instance a rotatable disc.

Preferably the supporting construction comprises two flat link plate members 80, 81 placed parallel to the plane of the link belt and at a distance from each other, between which plate members the rotatable disc 60 is placed. The rotatable disc 60 is provided with a central opening 82 for attachment to the supporting construction 80, 81, in which opening an axis 83 is placed. The ends of the axis 83 are each attached to a link plate member concerned.

In order to simplify the manufacturing process of the inventive link belt, and to obtain a manageable realisation of the rolling elements with the link belt, the supporting construction is preferably simultaneously made with the links, for instance during the same compression moulding or casting process in which the link belt is made from plastic material.

## Claims

1. Link belt (1) with links (2, 3, 4, 5, 6) provided with a number of link members (8, 9, 10, 11, 12, 13) for conveying products, the link belt (1) having a carrying surface for carrying products and a surface opposing said carrying surface, the link belt (1) defining a plane, the links (2, 3, 4, 5, 6) being made from a compression mouldable or castable plastic material or similar material, **characterized in that** a number of the outer link members (50, 51, 52, 53) comprise a rolling element (54, 55, 56, 57, respectively) which partly protrudes outwardly from the link member (50, 51, 52, 53), and **in that** said rolling element (54, 55, 56, 57, respectively) is positioned between the carrying surface and the surface opposing the carrying surface.

2. Link belt (1) according to claim 1, **characterized in that** each link (2, 3, 4, 5, 6) comprises a number of flat link members (8, 9, 10, 11, 12, 13) each with a recess (14) defined by pulling arms (15, 16; 15', 16'; 15") and each with a slotted hole (20), each link (2, 3, 4, 5, 6) having a hinge pin (7) with a centre line which can be moved in the plane of the link belt (1) through the slotted holes (20) of the link members (8, 9, 10, 11, 12, 13) of an adjacent link (2, 3, 4, 5, 6), the adjacent pulling arms (16, 15') of two adjacent link members (8, 9) of a link (2) being connected by a bush (17) in which the hinge pin (7) of said link (2) fits, at least one end of each hinge pin (7) being attached to an outer bush (18) having an inside (19) which is attached with an outer pulling arm (15"), the end wall of the slotted hole (20) of at least one of the outer link members having a semi-circular wall.

3. Link belt (1) according to claim 3, **characterized in that** the end wall of said slotted hole (20) forms a line (21) which encloses an angle unequal to 0° with the centre line (22) of the hinge pin (7') which fits in said slotted hole (20).

4. Link belt (1) according to claim 1, 2 or 3, **characterized in that** each outer link member (50, 51, 52, 53) comprises a rolling element (54, 55, 56, 57) which partly protrudes from the link member (50, 51, 52, 53).

5. Link belt (1) according to claim 1, 2, 3 or 4, **characterized in that** the rolling element (54, 55, 56, 57) comprises a rotatable disc (60).

6. Link belt (1) according to any one of the preceding claims, **characterized in that** each of the rolling elements (54, 55, 56, 57) is placed such in the link member (50, 51, 52, 53) concerned that when exerting lateral forces on the link belt (1) no moment is exerted on the link belt (1).

7. Link belt (1) according to claim 5 and 6, **characterized in that** the central plane of each of the rotatable discs (60) is situated in the central plane of the link belt (1).

8. Link belt (1) according to any one of the preceding claims, **characterized in that** each outer link member (50, 51, 52, 53) is provided with a supporting construction (80, 81) integrated therewith for rotatably supporting the rolling element (54, 55, 56, 57; 60).

9. Link belt (1) according to claim 8, **characterized in that** the supporting construction comprises two flat link plate members (80, 81) placed parallel to the plane of the link belt (1) and at a distance from each other, between which plate members (80, 81) the rolling element (60) is placed.

10. Link belt (1) according to claim 5 and 9, **characterized in that** the rotatable disc (60) has a central opening (82) in which an axis (83) is placed and the ends of the axis (83) each being attached to a link plate member concerned.

11. Link belt (1) according to any one of the preceding claims 8, 9 or 10, **characterized in that** the supporting construction (80, 81) is simultaneously manufactured with the links (2, 3, 4, 5, 6) from the same compression mouldable or castable plastic material.

## Patentansprüche

1. Gliederband (1) mit Gliedern (2, 3, 4, 5, 6) mit einer Anzahl Gliederteile (8, 9, 10, 11, 12, 13) zum Transportieren von Produkten versehen, wobei das Gliederband (1) eine Tragfläche zum Tragen von Produkten und eine Oberfläche gegenüber der Tragfläche hat, wobei das Gliederband (1) eine Ebene bestimmt, wobei die Glieder (2, 3, 4, 5, 6) aus einem formpressbaren oder gießbaren Kunststoffmaterial oder vergleichbarem Material hergestellt sind, **dadurch gekennzeichnet, daß** eine Anzahl der Außengliederteile (50, 51, 52, 53) ein Rollelement (54, 55, 56, 57, beziehungsweise) umfassen, das teils auswärts außer dem Gliederteil (50, 51, 52, 53) herausrägt, und daß das Rollelement (54, 55, 56, 57, beziehungsweise) zwischen der Tragfläche und der Oberfläche gegenüber der Tragfläche gelegen ist.

2. Gliederband (1) nach Anspruch 1, **dadurch gekennzeichnet, daß** jedes Glied (2, 3, 4, 5, 6) eine Anzahl platte Gliederteile (8, 9, 10, 11, 12, 13), jedes mit einer durch Zugarme (15, 16; 15', 16'; 15") bestimmten Aussparung (14) und jedes mit einem Schlitzloch (20), umfaßt, wobei jedes Glied (2, 3, 4, 5, 6) einen Drehstift (7) hat mit einer Herzlinie, die in der Ebene des Gliederbandes (1) durch die Schlitzlöcher (20) der Gliederteile (8, 9, 10, 11, 12, 13) eines benachbarten Gliedes (2, 3, 4, 5, 6) beweglich ist, wobei die benachbarten Zugarme (16, 15') von zwei benachbarten Gliederteilen (8, 9) eines Gliedes (2) durch eine Buchse (17), worin der Drehstift (7) des Gliedes (2) passt, verbunden sind, wobei zumindest ein Ende von jedem Drehstift (7) an einer Außenbuchse (18) befestigt ist, die eine Innenseite (19) hat, die mit einem Außenzugarm (15") verbunden ist, wobei die Endwand des Schlitzloches (20) von zumindest einem der Außengliederteile eine halbkreisförmige Wand hat.

3. Gliederband (1) nach Anspruch 3, **dadurch gekennzeichnet, daß** die Endwand des Schlitzloches (20) eine Linie (21) bildet, die einen Winkel ungleich an 0° mit der Herzlinie (22) des in dem Schlitzloch passenden Drehstiftes (7') macht.

4. Gliederband (1) nach Anspruch 1, 2 oder 3, **dadurch gekennzeichnet, daß** jedes Außengliederteil (50, 51, 52, 53) ein Rollelement (54, 55, 56, 57) umfaßt, das teilweise außer dem Gliederteil (50, 51, 52, 53) herausrägt.

5. Gliederband (1) nach Anspruch 1, 2, 3 oder 4, **dadurch gekennzeichnet, daß** das Rollelement (54, 55, 56, 57) eine drehbare Scheibe (60) umfaßt.

6. Gliederband (1) nach einem der vorhergehenden Ansprüche, **dadurch gekennzeichnet, daß** jedes der Rollelemente (54, 55, 56, 57) derartig in dem betreffenden Gliederteil (50, 51, 52, 53) angeordnet ist, daß bei Ausübung von seitlichen Kräften auf dem Gliederband (1) kein Moment auf dem Gliederband (1) ausgeübt wird.

7. Gliederband (1) nach Anspruch 5 und 6, **dadurch gekennzeichnet, daß** die Zentralebene von jeder der drehbaren Scheiben (60) in der Zentralebene des Gliederbandes (1) gelegen ist.

8. Gliederband (1) nach einem der vorhergehenden Ansprüche, **dadurch gekennzeichnet, daß** jedes Außengliederteil (50, 51, 52, 53) mit einer damit integrierten Stützungskonstruktion (80, 81) versehen ist, zum rotierbar Stützen des Rollelementes (54, 55, 56, 57; 60).

9. Gliederband (1) nach Anspruch 8, **dadurch gekennzeichnet, daß** die Unterstützungskonstruktion zwei platte, parallel zu der Ebene des Gliederbandes (1) angeordnete, auf Abstand voneinander gelegene Gliederplatteteile (80, 81) umfaßt, wozwischen das Rollelement (60) angeordnet ist.

10. Gliederband (1) nach Anspruch 5 und 9, **dadurch gekennzeichnet, daß** die Drehscheibe (60) eine zentrale Öffnung (82) hat, worin eine Achse (83) angeordnet ist und wobei die Enden der Achse (83) jedes an einem bezüglichen Gliederplatteteil befestigt sind.

11. Gliederband (1) nach einem der vorhergehenden Ansprüche 8, 9 oder 10, **dadurch gekennzeichnet, daß** die Unterstützungskonstruktion (80, 81) gleichzeitig mit den Gliedern (2, 3, 4, 5, 6) aus demselben formpressbaren oder gießbaren Kunststoffmaterial hergestellt ist.

## Revendications

1. Courroie à articulations (1), munie d'articulations (2, 3, 4, 5, 6) pourvues d'une pluralité d'éléments d'articulation (8, 9, 10, 11, 12, 13) pour transporter des produits, la courroie à articulations (1) ayant une surface porteuse devant porter des produits et une surface, opposée à ladite surface porteuse, la courroie à articulations (1) définissant un plan, les articulations (2, 3, 4, 5, 6) étant réalisées en une matière plastique susceptible d'être moulée par compression ou coulée ou bien d'un matériau similaire, **caractérisée en ce qu'**une pluralité des éléments de liaison extérieurs (50, 51, 52, 53) comprend un élément de roulement (54, 55, 56, 57, respectivement), faisant saillie en partie extérieurement depuis l'élément de liaison (50, 51, 52, 53); et **en ce que** ledit élément de roulement (54, 55, 56, 57, respectivement) est positionné entre la surface porteuse et la surface opposée à la surface porteuse.

2. Courroie à articulations (1) selon la revendication 1, **caractérisée en ce que** chaque liaison (2, 3, 4, 5, 6) comprend une pluralité d'éléments de liaison (8, 9, 10, 11, 12, 13) plats ayant chacun une cavité (14) définie par des bras de traction (15, 16; 15', 16'; 15") et chacun ayant un trou (20) fendu, chaque liaison (2, 3, 4, 5, 6) ayant une tige de charnière (7), avec un axe pouvant être déplacé dans le plan de la courroie à articulations (1), à travers les trous (20) fendus des éléments d'articulation (8, 9, 10, 11, 12, 13), d'une articulation (2, 3, 4, 5, 6) adjacente, les bras de traction (16, 15') adjacents de deux éléments de liaison (8, 9) adjacents d'une articulation (2) étant reliés par une douille (17), dans laquelle la tige de charnière (7) de ladite articulation (2) s'ajuste, au moins une extrémité de chaque tige d'articulation (7) étant attachée à une douille (18) extérieure ayant une partie intérieure (19) attachée à un bras de traction (15") extérieur, la paroi d'extrémité du trou (20) fendu d'au moins l'un des éléments d'articulation extérieurs ayant une paroi semi-circulaire.

3. Courroie à articulations (1) selon la revendication 3, **caractérisée en ce que** la paroi d'extrémité dudit trou (20) fendu forme une ligne (21) faisant un angle différent de 0° avec l'axe (22) de la tige de charnière (7') qui s'ajuste dans ledit trou (20) fendu.

4. Courroie à articulations (1) selon la revendication 1, 2, ou 3, **caractérisée en ce que** chaque élément d'articulation extérieur (50, 51, 52, 53) comprend un élément de roulement (54, 55, 56, 57) faisant partiellement saillie depuis l'élément d'articulation (50, 51, 52, 53).

5. Courroie à articulations (1) selon la revendication 1, 2, 3 ou 4, **caractérisée en ce que** l'élément de roulement (54, 55, 56, 57) est composé d'un disque (60) susceptible de tourner.

6. Courroie à articulations (1) selon l'une quelconque des revendications précédentes, **caractérisée en ce que** chacun des éléments de roulement (54, 55, 56, 57) est placé dans l'élément d'articulation (50, 51, 52, 53) concerné, de manière que, lorsque des forces latérales s'exercent sur la Courroie à articulations (1), aucun couple ne soit exercé sur la courroie à articulations (1).

7. Courroie à articulations (1) selon les revendications 5 et 6, **caractérisée en ce que** le plan central de chacun des disques (60) susceptible de tourner est situé dans le plan central de la courroie à articulations (1).

8. Courroie à articulations (1) selon l'une quelconque des revendications précédentes, **caractérisée en ce que** chaque élément d'articulation extérieur (50, 51, 52, 53) est muni d'une construction support (80, 81), réalisée d'un seul tenant avec lui, afin de supporter à rotation l'élément de roulement (54, 55, 56, 57; 60).

9. Courroie à articulations (1) selon la revendication 8, **caractérisée en ce que** la construction support comprend deux éléments formant plaque d'articulation (80, 81) plats placés parallèlement au plan de la courroie à articulations (1) et à distance l'un de l'autre, éléments formant plaque (80, 81) entre lesquels est placé l'élément de roulement (60).

10. Courroie à articulations (1) selon les revendications 5 et 9, **caractérisée en ce que** le disque (60) susceptible de tourner comporte une ouverture centrale (82), dans laquelle un axe (83) est placé, et les extrémités de l'axe (83) étant chacune attachées à un élément formant plaque d'articulation concerné.

11. Courroie à articulations (1) selon l'une quelconque des revendications 8, 9 ou 10 précédentes, **caractérisée en ce que** la construction support (80, 81) est fabriquée simultanément avec les articulations (2, 3, 4, 5, 6) à partir du même matériau plastique susceptible d'être moulé par compression ou d'être coulé.
